# EUROPÄISCHE PATENTSCHRIFT

(11) **EP 3 623 219 B1**
(45) Veröffentlichungstag und Bekanntmachung des Hinweises auf die Patenterteilung: **23.06.2021**
(21) Anmeldenummer: 19190556.1
(22) Anmeldetag: 07.08.2019
(51) Int. Cl.: B60P 7/08

(54) **PROFIL ZUR LADUNGSSICHERUNG SOWIE LADEFLÄCHE ZUR AUFNAHME EINES TRANSPORTGUTS**
PROFILE FOR SECURING A LOAD AND LOADING AREA FOR RECEIVING CARGO
PROFIL DE SÉCURITÉ DE CHARGEMENT AINSI QUE SURFACE DE CHARGEMENT PERMETTANT DE RECEVOIR UNE CARGAISON TRANSPORTÉE

(30) Priorität: 17.09.2018 DE 102018122731
(43) Veröffentlichungstag der Anmeldung: 18.03.2020
(73) Patentinhaber: König-Trailer GmbH, 72818 Trochtelfingen (DE)
(72) Erfinder: König, Reinhold, 72818 Trochtelfingen (DE)
(74) Vertreter: Mammel und Maser

(56) Entgegenhaltungen:
- EP-A1- 0 296 085
- EP-A1- 3 287 317
- DE-A1-102016 115 786
- US-A- 5 444 897
- US-A1- 2016 207 439
- US-B2- 8 393 838

## Beschreibung

Die Erfindung betrifft ein Profil zur Ladungssicherung sowie eine Ladefläche zur Aufnahme eines Transportguts.

Aus der US 8,393,838 B2 ist ein Profil für eine Ladefläche zur Ladungssicherung bekannt, welche einen sich in Längsrichtung erstreckenden Grundkörper umfasst. In diesem Grundkörper ist ein Anschlussabschnitt vorgesehen, welcher zur Ladefläche anordenbar ist, sowie ein Befestigungsabschnitt, der in Längsrichtung mehrere zueinander beabstandete Durchgangsbohrungen aufweist. In diesem Befestigungsabschnitt ist ein Befestigungshaken einsetzbar, um daraufhin eine Ladungssicherung vorzunehmen.

Aus der EP 3 287 317 A1 ist des Weiteren ein Profil für eine Ladefläche zur Ladungssicherung bekannt. Dieses Profil umfasst einen Grundkörper mit einem Befestigungsabschnitt, in welchem eine Durchgangsbohrung vorgesehen ist. In dieser Durchgangsbohrung ist ein Befestigungselement verschiebbar vorgesehen, welches in einem Nichtgebrauchszustand durch Haken gegenüber Herausfallen aus der Bohrung gesichert ist. In einem Gebrauchszustand wird das Befestigungselement durch eine rechteckförmige Anschlagplatte zur Vermeidung einer Beschädigung der Bohrung gesichert gehalten.

Dokument US 5 444 897 A1 offenbart ein Befestigungselement aus dem Stand der Technik der in zwei Positionen überführbar ist.

Zur Sicherung von Transportgütern auf einer Ladefläche können Spanngurte eingesetzt werden, mit denen das Transportgut auf der Ladefläche verzurrt wird. Zur Fixierung dieser Spanngurte können an der Ladefläche Befestigungsstellen vorgesehen sein, die beispielsweise in Form von Ösen oder Öffnungen in oder an der Ladefläche ausgebildet sind. An diesen Ösen oder Öffnungen werden die Spanngurte, beispielsweise mit daran vorgesehenen Haken, befestigt. Solche Ösen und Öffnungen können im Gebrauch verschmutzen, indem sich beispielsweise transportiertes Schüttgut in diesen festsetzt, sodass vor dem Anbringen der Haken deshalb oftmals ein Reinigen oder zumindest Entfernen solcher Verschmutzungen erforderlich ist. Sofern die Ladefläche Öffnungen zum Anbringen der Haken aufweist, kann beim Transport von Schüttgütern zudem ein ungewollter Verlust des Schüttguts auftreten, da dieses durch die Öffnungen in der Ladefläche entweichen kann.

Aufgabe der Erfindung ist es, ein Profil für eine Ladefläche zur Ladungssicherung vorzuschlagen, welches einen einfachen Gebrauch ermöglicht und einen Verlust von Schüttgut verhindert. Zudem ist es Aufgabe der Erfindung eine Ladefläche vorzuschlagen, die eine einfache Sicherung sowie den Transport unterschiedlicher Transportgüter ermöglicht.

Diese Aufgabe wird durch ein Profil für eine Ladefläche zur Ladungssicherung gelöst, mit einem sich in Längsrichtung erstreckenden Grundkörper, dessen Länge ein Vielfaches der Breite aufweist, wobei der Grundkörper einen Anschlussabschnitt aufweist, welcher zur Ladefläche anordenbar ist, sowie einen Befestigungsabschnitt, der sich benachbart zum Anschlussabschnitt erstreckt und in Längsrichtung mehrere zueinander beabstandete Durchgangsbohrungen aufweist und mit zumindest einem Verschließelement, welches an einer Innenseite des Befestigungsabschnitts vorgesehen ist und das in einer Ausgangsposition an der Innenseite des Befestigungsabschnitts anliegt und die Durchgangsbohrungen verschließt, wobei das Verschließelement in eine Befestigungsposition überführbar ist, in der zumindest eine Durchgangsbohrung geöffnet ist und zumindest ein Haken einer Ladungssicherungseinrichtung in der Durchgangsbohrung positionierbar ist. Durch das Vorsehen zumindest eines Verschließelements, welches in der Ausgangsposition die Durchgangsbohrungen verschließt, kann ein Profil zur Ladungssicherung ausgebildet sein, bei dem ein Verschmutzen und Zusetzen der Durchgangsbohrungen durch ein transportiertes Schüttgut oder durch Schmutz verhindert werden kann. Darüberhinaus kann durch das zumindest eine Verschließelement verhindert werden, dass beim Transport eines Schüttguts auf der Ladefläche, dieses durch die Durchgangsbohrungen austritt und verloren geht. Dadurch, dass das Verschließelement in der Befestigungsposition zumindest eine Durchgangsbohrung zum Anbringen der Ladungssicherungseinrichtung freigibt, kann ein einfaches und sicheres Befestigen, beispielsweise eines Hakens der Ladungssicherungseinrichtung an der zumindest einen Durchgangsbohrung erfolgen. Durch den sich länglich erstreckenden Grundkörper kann das Profil abschnittsweise, insbesondere vollständig, entlang der Ladefläche vorgesehen werden, sodass eine flexible Sicherung des Transportguts auf der Ladefläche ermöglicht ist.

Eine bevorzugte Weiterbildung des Profils sieht vor, dass das zumindest eine Verschließelement durch zumindest eine Halteeinrichtung relativ zum Befestigungsabschnitt verschiebbar aufgenommen ist. Durch eine solche Halteeinrichtung kann das zumindest ein Verschließelement beweglich zum Befestigungsabschnitt angeordnet werden, sodass dieses zwischen der Ausgangsposition und der Befestigungsposition übergeführt werden kann. Dabei kann durch die Halteeinrichtung eine Führung für das Verschließelement zum Ausführen dieser Stellbewegung ausgebildet sein.

Vorteilhafterweise kann vorgesehen sein, dass die zumindest eine Halteeinrichtung in Längsrichtung des Befestigungsabschnitts gesehen zwischen zwei Durchgangsbohrungen angeordnet ist. Durch diese Anordnung kann eine optimale Ausrichtung des Verschließelements erreicht werden, sodass sowohl ein Verschließen als auch ein Freigeben zumindest der unmittelbar benachbarten Durchgangsbohrungen sichergestellt ist.

Bevorzugt kann die Halteeinrichtung einen Befestigungsbügel aufweist, dessen Befestigungsöse an einer Außenseite des Befestigungsabschnitts vorgesehen ist, und zumindest ein Bügelabschnitt des Befestigungsbügels durch den Befestigungsabschnitt zur Innenseite hindurchgeführt ist und an dem Verschließelement angreift. Dadurch kann die Ladungssicherungseinrichtung ergänzend zu den Durchgangsbohrungen auch an einem solchen Befestigungsbügel befestigt werden. Dabei können beispielsweise die Haken der Ladungssicherungseinrichtung in die Befestigungsöse eingreifen oder es können Spanngurte zum Verzurren des Transportguts durch die Befestigungsöse hindurchgeführt werden. Der zumindest eine, von der Außenseite des Befestigungsabschnitts zur Innenseite hindurchgeführte Bügelabschnitt des Befestigungsbügels kann als Führung zum Verschieben des Verschließelements zwischen der Ausgangsposition und der Befestigungsposition dienen.

Eine weitere bevorzugte Ausgestaltung des Profils sieht vor, dass der Befestigungsbügel zum Befestigungsabschnitt und zum Verschließelement relativ verschiebbar vorgesehen ist und vorzugsweise aus einer Nichtgebrauchsposition in eine Gebrauchsposition überführbar ist. Hierfür können Bohrungen in dem Befestigungsabschnitt vorgesehen sein, durch welche der Befestigungsbügel, bzw. der zumindest eine Bügelabschnitt, hindurchgeführt ist. Dadurch ist ein Verschieben des Befestigungsbügels relativ zum Befestigungsabschnitt ermöglicht, sodass dieser aus der Nichtgebrauchsposition in die Gebrauchsposition gebracht werden kann. In der Nichtgebrauchsposition kann der Befestigungsbügel bündig oder nahezu bündig zur Außenseite des Befestigungsabschnitts vorgesehen sein. Bevorzugt kann eine Vertiefung im Befestigungsabschnitt vorgesehen sein, in welcher der Befestigungsbügel in der Nichtgebrauchsposition angeordnet ist, sodass eine ebene Fläche an der Außenseite gebildet ist.

Insbesondere kann vorgesehen sein, dass die Halteeinrichtung das Verschließelement federnd nachgiebig aufnimmt, sodass dieses selbstständig in der Ausgangsposition angeordnet ist. Dadurch ist ein einfacher und komfortabler Schließmechanismus gebildet. Das Verschließelement wird durch eine Federkraft in der Ausgangsposition gehalten und bei Ausübung einer Kraft entgegen der Federwirkung, in die Befestigungsposition, in welcher zumindest eine Durchgangsbohrung freigegeben ist, übergeführt.

Vorteilhafterweise kann zwischen dem Verschließelement und dem zur Innenseite des Befestigungsabschnitts und durch das Verschließelement hindurch sich erstreckenden Befestigungsbügel ein nachgiebiges Kraftspeicherelement vorgesehen sein. Hierdurch kann eine kompakte Ausgestaltung der Halteeinrichtung vorgesehen sein, welche die selbstständige Anordnung des Verschließelements in der Ausgangsposition ermöglicht. Das Überführen des Verschließelements aus der Ausgangsposition in die Befestigungsposition erfolgt dabei entgegen der Wirkung des Kraftspeicherelements. Durch die im Kraftspeicherelement gespeicherte Energie, kann das Verschließelement anschließend aus der Befestigungsposition selbsttätig in die Ausgangsposition übergeführt werden.

Bevorzugt ist das Kraftspeicherelement als ein Federelement ausgebildet. Dabei ist das Federelement vorzugsweise als eine Blattfeder oder als eine Federspange ausgebildet. Die Verwendung eines Federelements ermöglicht eine einfache konstruktive und kostengünstige Ausgestaltung der Halteeinrichtung und es kann gleichzeitig eine hohe Funktionssicherheit erreicht werden. Durch das Vorsehen einer Blattfeder oder Federspange als Federelement, kann zudem eine geringe Bauhöhe der Halteeinrichtung realisiert werden. Im Verhältnis zur Bauhöhe, bietet die Federspange bzw. Blattfeder dabei einen großen Federweg.

Eine Weiterbildung des Profils sieht vor, dass zumindest zwei Halteeinrichtungen für ein Verschließelement vorgesehen sind. Dabei kann insbesondere vorgesehen sein, dass sich ein Verschließelement entlang des Befestigungsabschnitts erstreckt und mehrere Halteeinrichtungen vorgesehen sind. Dadurch, dass das Verschließelement durch zwei oder mehr Halteeinrichtungen aufgenommen ist, kann ein sich länglich erstreckendes Verschließelement entlang eines Abschnitts der Ladefläche oder nahezu vollständig entlang der Ladefläche vorgesehen werden. Dadurch, dass zwei oder mehr Halteeinrichtungen vorgesehen sind, ist über die gesamte Länge des Verschließelements eine Führung erreicht. In Abhängigkeit von der Anzahl der Halteeinrichtungen variiert die Anzahl der Kraftspeicherelemente, sodass sich aus einer größeren Anzahl Kraftspeicherelemente eine höhere Federkraft ergibt. Dadurch kann sichergestellt sein, dass das Verschließelement in der Ausgangsposition gehalten ist, auch wenn eine Kraft von der Außenseite des Befestigungsabschnitts auf das Verschließelement wirkt, beispielsweise durch ein auf der Ladefläche transportiertes Schüttgut.

Bevorzugt kann vorgesehen sein, dass der Anschlussabschnitt des Grundkörpers eine äußere Auflagefläche aufweist, die bündig zur Ladefläche anordenbar ist. Dadurch können zumindest die äußere Auflagefläche des Anschlussabschnitts sowie die Ladefläche in einer gemeinsamen Ebene vorgesehen sein. Auf diese Weise kann eine glatte Ladefläche ausgebildet sein, die eine optimale Ausnutzung der Ladefläche ermöglicht.

In einer weiteren Ausgestaltung des Profils kann vorgesehen sein, dass sich an den Befestigungsabschnitt ein Abschlussabschnitt anschließt, welcher dem Anschlussabschnitt gegenüberliegt und eine seitliche Begrenzung der Ladefläche bildet. Dadurch ist ein Profil gebildet, welches als Abschlussprofil zu der Ladefläche angeordnet werden kann, sodass eine Seitenbegrenzung der Ladefläche vorgesehen ist. Ein solcher Abschlussabschnitt kann, insbesondere, wenn er abgewinkelt oder abgekantet zum Befestigungsabschnitt vorgesehen ist, auch eine Versteifung des Profils bilden. An dem Abschlussabschnitt können zusätzlich Befestigungselemente vorgesehen sein, an denen beispielsweise eine Seitenwand zur seitlichen Begrenzung der Ladefläche angeordnet werden kann.

Bevorzugt kann der Grundkörper, welcher vorzugsweise zumindest den Anschlussabschnitt und den Befestigungsabschnitt umfasst, aus einem plattenförmigen Material bestehen, welches gekantet ist oder als ein gezogenes Profil hergestellt ist. Durch einen solchen gekanteten Grundkörper oder gezogenes Profil kann ein biegesteifes Profil ausgebildet sein, welches bei der Sicherung von Transportgut große Kräfte aufnehmen kann. Zudem kann ein solches Profil auch zur Verstärkung der Ladefläche dienen.

Eine bevorzugte Ausgestaltung des Profils sieht vor, dass der Befestigungsabschnitt gegenüber dem Anschlussabschnitt, der zumindest abschnittsweise in der Ebene der Ladefläche liegt, nach außen abfallend geneigt ist, und der Grundkörper als ein Außenrahmenprofil ausgebildet ist, welches an eine äußere Seitenkante der Ladefläche angrenzend befestigt ist. Durch den gegenüber dem Anschlussabschnitt abgewinkelt vorgesehenen Befestigungsabschnitt kann bei der Sicherung mit der Ladungssicherungseinrichtung ein günstiger Winkel zur Krafteinleitung in das Profil erreicht sein. Zudem ermöglicht der nach außen abfallende Befestigungsabschnitt eine einfache Reinigung der Ladefläche. Durch die Ausgestaltung des Grundkörpers als ein Außenrahmenprofil, kann dieser unmittelbar an einer Kante der Ladefläche angeordnet werden. Dadurch kann ein solches Außenrahmenprofil eine seitliche Begrenzung der Ladefläche bilden.

Eine alternative Ausgestaltung des Profils sieht vor, dass der Befestigungsabschnitt und der Anschlussabschnitt in einer gemeinsamen Ebene, vorzugsweise in der Ebene der Ladefläche, liegen und der Grundkörper als Innenrahmenprofil ausgebildet ist, welches zwischen zwei Ladeflächen befestigbar ist. Durch diese Ausgestaltung des Profils ist es ermöglicht, dieses zwischen zwei Ladeflächen bündig zu deren Auflageflächen vorzusehen oder das Profil eingelassen in einer Ladefläche anzuordnen, sodass eine ebene Auflagefläche gebildet ist.

Die der Erfindung zugrundeliegende Aufgabe wird zudem durch eine Ladefläche zur Aufnahme eines Transportguts, mit einem sich flächig erstreckenden Aufnahmebereich für das Transportgut, welchem zumindest ein Profil zum Anbringen einer Ladungssicherungseinrichtung zugeordnet ist, gelöst, wobei das zumindest eine Profil nach einem der zuvor beschriebenen Ausführungsformen ausgebildet ist. Eine solche Ladefläche kann in unterschiedlichen Einsatzbereichen Verwendung finden, beispielsweise kann diese als Ladefläche für ein Fahrzeug, Anhänger oder eines Güterwagens eingesetzt werden oder auch eine Ladefläche eines Transportcontainers bilden. Durch das Vorsehen zumindest eines Profils gemäß einer der vorherig beschriebenen Ausführungsformen kann zudem der Transport von unterschiedlichen Transportgütern ermöglicht sein. Dabei ist durch das Profil sowohl eine einfache Sicherung des Transportguts durch das Anbringen einer Ladungssicherungseinrichtung ermöglicht als auch der Transport von Schüttgütern auf der Ladefläche, wobei durch das Verschließelement sicherstellt, dass das Schüttgut während des Transports durch die Durchgangsbohrungen nicht von der Ladefläche verloren geht.

Eine bevorzugte Weiterbildung der Ladefläche sieht vor, dass das zumindest eine Profil in dem Aufnahmebereich vorgesehen ist oder das zumindest eine Profil an wenigstens einer Seitenkante des Aufnahmebereichs angeordnet ist. Dabei kann insbesondere vorgesehen sein, dass sich das Profil vollständig entlang des Aufnahmebereichs erstreckt, sodass auf der gesamten Ladefläche eine Sicherung des Transportguts ermöglicht ist.

In einer bevorzugten Ausgestaltung der Ladefläche ist vorgesehen, dass Profile an zwei einander gegenüberliegenden Seitenkanten des Aufnahmebereichs vorgesehen sind und einen seitlichen Rahmen bilden oder den Aufnahmebereich vollständig umgeben und einen umlaufenden Rahmen bilden. Dadurch kann zu mehreren Seiten eine Sicherung des Transportguts erfolgen.

In einer weiteren Ausgestaltung der Ladefläche kann vorgesehen sein, dass an den Durchgangsbohrungen der Profile zumindest ein Spannbalken befestigbar ist. Durch einen solchen Spannbalken kann eine Transportsicherung auf der Ladefläche vorgesehen sein. Hierzu können auch mehrere solcher Spannbalken in einem Abstand zueinander an der Ladefläche angebracht werden. Das Transportgut, beispielsweise eine auf der Ladefläche aufliegende Palette, kann zwischen zwei Spannbalken angeordnet werden, sodass ein Verrutschen des Transportguts verhindert ist. Ebenso kann an dem Spannbalken eine Trägereinrichtung befestigt werden, sodass beispielsweise ein Fahrrad- oder Motorradträger auf der Ladefläche fixiert werden kann.

Eine vorteilhafte Weiterbildung der Ladefläche sieht vor, dass der Spannbalken zumindest eine Profilschiene und zumindest zwei Aufnahmen umfasst, wobei die Aufnahme einen Haken zum Eingreifen in die Durchgangsbohrung aufweist, welche den Spannbalken zum Aufnahmebereich fixiert und vorzugsweise die Profilschiene in der Lage innerhalb der Aufnahme veränderbar und durch eine lösbare Verbindung fixiert ist. Durch den an der Aufnahme vorgesehenen Haken kann der Spannbalken in einer definierten Position auf der Ladefläche angeordnet und fixiert werden. Durch die verschiebbare Anordnung der Profilschiene in der Aufnahme kann zudem eine Anpassung der Länge des Spannbalkens an eine Breite oder Länge der Ladefläche ermöglicht sein.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine perspektivische Ansicht eines Anhängers mit einer Ladefläche zur Aufnahme eines Transportguts,
- Figur 2: eine perspektivische Ansicht von vorne auf ein Profil zur Ladungssicherung für die Ladefläche gemäß Figur 1,
- Figur 3: eine perspektivische Ansicht von hinten auf das Profil gemäß Figur 2,
- Figur 4: eine Explosionsdarstellung von vorne auf das Profil gemäß Figur 2,
- Figur 5: eine Schnittansicht des Profils gemäß dem Schnitt A-A in Figur 2 mit einem Verschließelement in einer Ausgangsposition,
- Figur 6: eine Schnittansicht des Profils gemäß dem Schnitt A-A in Figur 2 mit dem Verschließelement in einer Befestigungsposition,
- Figur 7: eine Schnittansicht des Profils gemäß dem Schnitt A-A in Figur 2 mit einem Befestigungsbügel in einer Gebrauchsposition,
- Figur 8: eine perspektivische Ansicht auf die Ladefläche des Anhängers mit einem darauf angeordneten Spannbalken und
- Figur 9: eine Detailansicht auf einen Endabschnitt des Spannbalkens gemäß Figur 8.

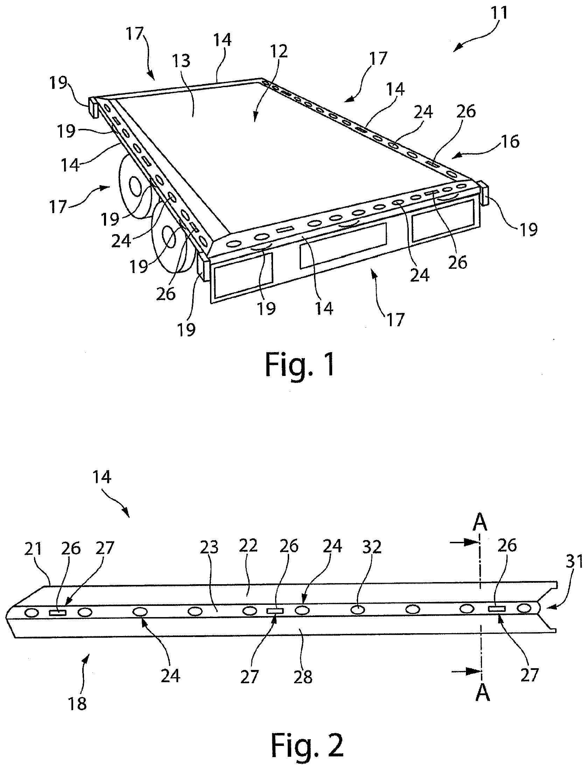

Figur 1 zeigt einen Anhänger 11 mit einer Ladefläche 12. Eine solche Ladefläche 12 kann nicht nur Verwendung bei einem Anhänger 11 finden, sondern kann beispielsweise auch als Ladefläche 12 an einem Kraftfahrzeug, Schienenfahrzeug, Transportflugzeug oder auch als Ladefläche an einem Transportcontainer vorgesehen sein. Der in Figur 1 dargestellte Anhänger 11 ist folglich nur als exemplarisch anzusehen.

Die Ladefläche 12 umfasst einen sich flächig erstreckenden Aufnahmebereich 13, auf dem ein zu transportierendes Transportgut angeordnet werden kann. Um einen unbeschadeten Transport des Transportguts zu ermöglichen, ist eine Ladungssicherung erforderlich. Hierfür weist die Ladefläche 12 ein Profil 14 zur Ladungssicherung auf, an welchem eine nicht näher dargestellte Ladungssicherungseinrichtung befestigt werden kann. Eine solche Ladungssicherungseinrichtung können beispielsweise Spanngurte sein, vorzugsweise mit daran vorgesehenen Haken, die an dem Profil 14 befestigt werden. Auch Sicherungsketten oder Sicherungsstangen können an einem solchen Profil 14 zur Sicherung des Transportguts angebracht werden.

Die Profile 14 können als Rahmen 16 die Ladefläche 12, insbesondere den Aufnahmebereich 13 der Ladefläche 12, umgeben. Das Profil 14 ist als Außenrahmenprofil ausgebildet und begrenzt seitlich die Ladefläche 12.

Es kann auch vorgesehen sein, dass die Profile 14 nicht zu einem umlaufenden Rahmen 16 zusammengesetzt sind, sondern die Profile 14 entlang zweier sich gegenüberliegenden Kanten 17 der Ladefläche 12 vorgesehen sind. Ebenso kann vorgesehen sein, dass das Profil 14 als Innenrahmenprofil ausgebildet ist und zwischen zwei Ladeflächenabschnitte angeordnet ist oder bündig zwischen den Ladeflächenabschnitten vorgesehen ist. Hierfür kann das Profil 14 beispielsweise als eine Profilschiene ausgebildet sein, sodass vorzugsweise eine ebene Ladefläche 12 gebildet ist.

An dem Profil 14 können Befestigungselemente 19 vorgesehen sein. Diese dienen insbesondere zum Montieren nicht näher dargestellte Seitenwände zur Ladefläche 12. Auf diese Weise kann eine seitliche Begrenzung der Ladefläche 12 ausgebildet sein, sodass ein Schüttgut auf der Ladefläche 12 transportiert werden kann. Um die Seitenwände zur Ladefläche 12 zu fixieren, können solche Befestigungselemente 19 beispielsweise als Steckverbinder ausgebildet sein, in welche korrespondierende Dorne an den Seitenwänden eingesteckt werden. Die Seitenwände können durch die Befestigungselemente 19 klappbar zur Ladefläche 12 vorgesehen sein.

In Figur 2 ist eine perspektivische Ansicht von vorne auf eine Außenseite 18 des Profils 14 dargestellt. Das Profil 14 ist durch einen sich länglich erstreckenden Grundkörper 21 gebildet. Dieser Grundkörper 21 umfasst einen Anschlussabschnitt 22 sowie einen Befestigungsabschnitt 23, der sich benachbart zum Anschlussabschnitt 22 entlang des Grundkörpers 21 erstreckt. Der Befestigungsabschnitt 23 umfasst mehrere Durchgangsbohrungen 24, die entlang des Befestigungsabschnitts 23 zueinander beabstandet im Grundkörper 21 vorgesehen sind. Zudem sind an dem Befestigungsabschnitt 23 mehrere Befestigungsbügel 26 vorgesehen. Diese Befestigungsbügel 26 sind, vorzugsweise in regelmäßigen Abständen, zwischen zwei Durchgangsbohrungen 24 angeordnet. An diesen Befestigungsbügeln 26 kann ebenfalls die Ladungssicherungseinrichtung angebracht werden. Gegenüberliegend zum Anschlussabschnitt 22 weist der Grundkörper 21 einen Abschlussabschnitt 28 auf. Durch diesen Abschlussabschnitt 28 kann ein seitlicher Abschluss bzw. eine seitliche Begrenzung der Ladefläche 12 gebildet sein. Der zwischen dem Anschlussabschnitt 22 und dem Abschlussabschnitt 28 verlaufende Befestigungsabschnitt 23 kann zum Abschlussabschnitt 28 geneigt ausgerichtet sein.

Der Grundkörper 21 ist insbesondere aus einem plattenförmigen Material ausgebildet. Dieses kann beispielsweise ein Stahlblech oder ein Aluminiumblech sein. Der Grundkörper 21 des Profils 14 kann auch ein gekantetes plattenförmiges Material sein. Ebenso kann der Grundkörper 21 aus einem gezogenen oder stranggepressten Profil ausgebildet sein.

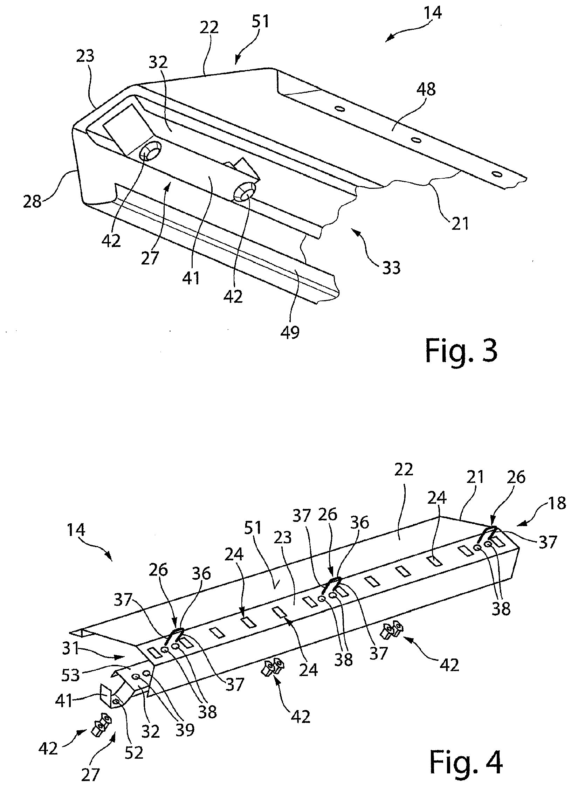

Die Figur 3 zeigt eine Ansicht auf eine Innenseite 31 des Profils 14. An der Innenseite 31 des Profils 14 ist ein Verschließelement 32 vorgesehen. In Figur 2 und 3 ist dieses Verschließelement 32 in einer Ausgangsposition 33 angeordnet, in welcher das Verschließelement 32 die Durchgangsbohrungen 24 im Befestigungsabschnitt 23 verschließt.

Das Verschließelement 32 kann aus dieser Ausgangsposition 33 in eine Befestigungsposition 34 überführt werden. In der Befestigungsposition 34 gibt das Verschließelement 32 die Durchgangsbohrungen 24 frei, sodass die Ladungssicherungseinrichtung an den Durchgangsbohrungen 24 befestigt werden kann.

Das Verschließelement 32 ist durch mehrere Halteeinrichtungen 27 mit dem Grundkörper 21 verbunden. Diese Halteeinrichtungen 27 nehmen das Verschließelement 32 zum Grundkörper 21, insbesondere zum Befestigungsabschnitt 23, relativ bewegbar auf. Dadurch ist das Verschließelement 32 zwischen der Ausgangsposition 33 und der Befestigungsposition 34 überführbar.

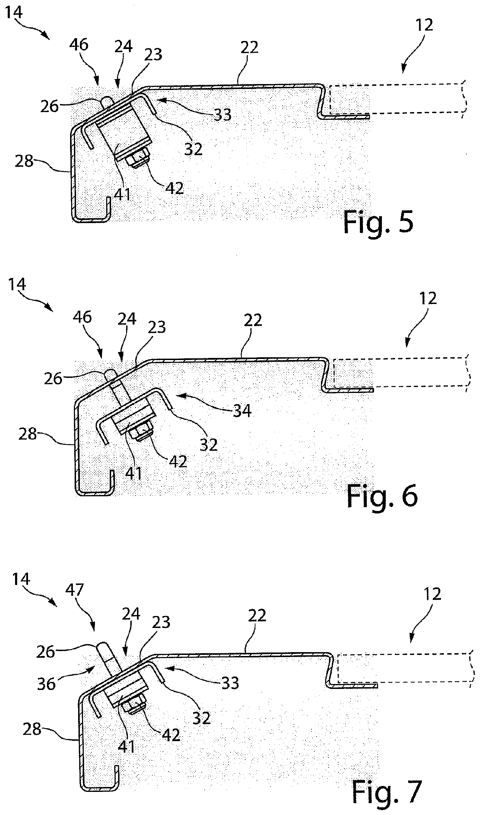

Jede Halteeinrichtung 27 umfasst einen U-förmig ausgestalteten Befestigungsbügel 26. Dieser Befestigungsbügel 26 weist eine Befestigungsöse 36 sowie zwei Bügelabschnitte 37 auf. Die Befestigungsöse 36 ist der Außenseite 18 des Befestigungsabschnitts 23 zugeordnet und zum Anbringen der Ladungssicherungseinrichtung vorgesehen. Die beiden Bügelabschnitte 37 erstrecken sich von der Außenseite 18 ausgehend durch Bohrungen 38 im Befestigungsabschnitt 23 und entsprechende Bohrungen 39 im Verschließelement 32 zur Innenseite 31 des Profils 14. In diesen Bohrungen 38, 39 ist der Befestigungsbügel 26 relativ zum Befestigungsabschnitt 23 verschiebbar aufgenommen. Dadurch ist der Befestigungsbügel 26 aus einer in den Figuren 5 und 6 dargestellten Nichtgebrauchsposition 46 in eine in Figur 7 dargestellte Gebrauchsposition 47 überführbar und das Verschließelement 32 aus der Ausgangsposition 33 gemäß Figur 5 in die Befestigungsposition 34 gemäß Figur 6 überführbar.

An den Bügelabschnitten 37 ist jeweils ein Kraftspeicherelement 41 vorgesehen, welches das Verschließelement 32 selbsttätig in der Ausgangsposition 33 anordnet. Das Kraftspeicherelement 41 ist insbesondere als Federelement ausgebildet und greift an den Bügelabschnitten 37 des Befestigungsbügels 26, insbesondere an Endbereichen der Bügelabschnitte 37, an. Das Kraftspeicherelement 41 kann durch Schrauben 42 an den Bügelabschnitten 37 befestigt sein. Das Kraftspeicherelement 41 ist insbesondere als Federspange oder Blattfeder ausgebildet, kann jedoch auch als ein beliebiges anderes Federelement ausgebildet sein.

Das Kraftspeicherelement 41 kann zwischen dem Befestigungsbügel 26 und dem Verschließelement 32 vorgespannt vorgesehen sein. Durch die Federkraft des Kraftspeicherelements 41 wird das Verschließelement 32 selbsttätig in der Ausgangsposition 33 und der Befestigungsbügel 26 in der Nichtgebrauchsposition 46 gehalten.

Wie in Figur 3 dargestellt, kann der Anschlussabschnitt 22 einen Montagebereich 48 aufweisen, der zum Anschlussabschnitt 22 abgewinkelt oder abgekantet ausgebildet sein kann. Durch diesen Montagebereich 48 kann das Profil 14 mit der Ladefläche 12 bzw. dem Aufnahmebereich 13 der Ladefläche 12 verbunden werden, beispielsweise verschraubt oder vernietet. Der Anschlussabschnitt 22 kann eine äußere Auflagefläche 51 bilden, die sich bündig an die Ladefläche 12 anschließt. Der gegenüberliegende Abschlussabschnitt 28 kann eine Abkantung 49 aufweisen. Durch diese kann eine zusätzliche Versteifung des Grundkörpers 21 gebildet sein.

Figur 4 zeigt eine Explosionsdarstellung, die nochmals verdeutlicht, wie das Profil 14 aus den einzelnen Komponenten zusammengesetzt ist. Insbesondere verdeutlicht die Darstellung, dass die Befestigungsbügel 26 U-förmig ausgestaltet sind und die Befestigungsöse 36 an der Außenseite 18 des Befestigungsabschnitts 23 vorgesehen ist und die Bügelabschnitte 37 durch die Bohrungen 38 im Befestigungsabschnitt 23 sowie den Bohrungen 39 im Verschließelement 32 hindurchgeführt sind.

Zur Befestigung des Kraftspeicherelements 41 am Befestigungsbügel 26 sind weitere Bohrungen 52 in dem Kraftspeicherelement 41 vorgesehen, durch welche die Bügelabschnitte 37 ebenfalls hindurchgeführt sind. Durch die an den Bügelabschnitten 37 vorgesehenen Schrauben 42 ist das Kraftspeicherelement 41 zum Befestigungsbügel 26 fixiert.

Figur 4 verdeutlicht zudem, dass das Verschließelement 32 eine zur Innenseite 31 des Befestigungsabschnitts 23 gerichtete Anlagefläche 53 aufweist, die in der Ausgangsposition 33 an der Innenseite 31 des Befestigungsabschnitts 23 flächig anliegt und die Durchgangsbohrungen 24 verschließt.

Die Figuren 5 bis 7 zeigen jeweils eine Schnittansicht des Profils 14 gemäß dem Schnitt A-A in Figur 2. Diese Figuren zeigen unterschiedliche Anordnungen des Verschließelements 32 und Haltebügels 26.

Figur 5 zeigt eine erste Anordnung, in der das Verschließelement 32 in der Ausgangsposition 33 und der Haltebügel 26 in der Nichtgebrauchsposition 46 angeordnet ist. In dieser Anordnung befindet sich das Kraftspeicherelement 41 in einer Ausgangsstellung, in der das Kraftspeicherelement 41 eine zumindest geringfügige Vorspannung aufweist. Die sich daraus ergebende Federkraft zwischen dem Haltebügel 26 und dem Verschließelement 32 bewirkt, dass das Verschließelement 32 in der Ausgangsposition 33 und der Befestigungsbügel 26 in der Nichtgebrauchsposition 46 gehalten wird. In der Nichtgebrauchsposition 46 liegt der Befestigungsbügel 26 an der Außenseite 18 des Befestigungsabschnitts 23 an.

In Figur 6 ist eine zweite Anordnung, in der das Verschließelement 32 in die Befestigungsposition 34 übergeführt ist. In dieser sind die Durchgangsbohrungen 24 zum Befestigen der Ladungssicherungseinrichtung freigegeben. Das Freigeben der Durchgangsbohrungen 24 erfolgt durch das Anbringen der Ladungssicherungseinrichtung, beispielsweise die Haken in die Durchgangsbohrungen 24 eingesetzt werden und dabei von außen gegen das Verschließelement 32 drücken. Dadurch wird das Verschließelement 32 entgegen der Federkraft des Kraftspeicherelements 41 in die Befestigungsposition 34 überführt und die Durchgangsbohrungen 24 freigegeben. Das Kraftspeicherelement 41 wird dadurch gespannt und die Federkraft aufgebaut. Diese Federkraft bewirkt, dass das Verschließelement 32 nach dem Demontieren der Ladungssicherungseinrichtung von den Durchgangsbohrungen 24 wieder in die Ausgangsposition 32 rückgeführt wird.

Figur 7 zeigt eine dritte Anordnung, in welcher das Verschließelement 32 wiederum in der Ausgangsposition 33 und der Befestigungsbügel 26 in der Gebrauchsposition 47 angeordnet ist. In der Gebrauchsposition 47 ist die Befestigungsöse 36 zugänglich, sodass die Ladungssicherungseinrichtung an dem Befestigungsbügel 26 angebracht werden kann. In der Gebrauchsposition 47 des Befestigungsbügels 26 ist das Kraftspeicherelement 41 in einem gespannten Zustand, sodass das Verschließelement 32 mit hoher Kraft am Befestigungsabschnitt 23 anliegend gehalten ist. Nach dem Lösen der Ladungssicherungseinrichtung vom Befestigungsbügel 26 wird dieser aufgrund der Federkraft des Kraftspeicherelements 41 selbsttätig aus der Gebrauchsposition 47 zurück in die Nichtgebrauchsposition 46 überführt. Dadurch, dass jede Halteeinrichtung 27 unabhängig von der benachbarten Halteeinrichtung 27 ist, sind nach Bedarf einzelne Befestigungsbügel 26 in die Gebrauchsposition 47 überführbar.

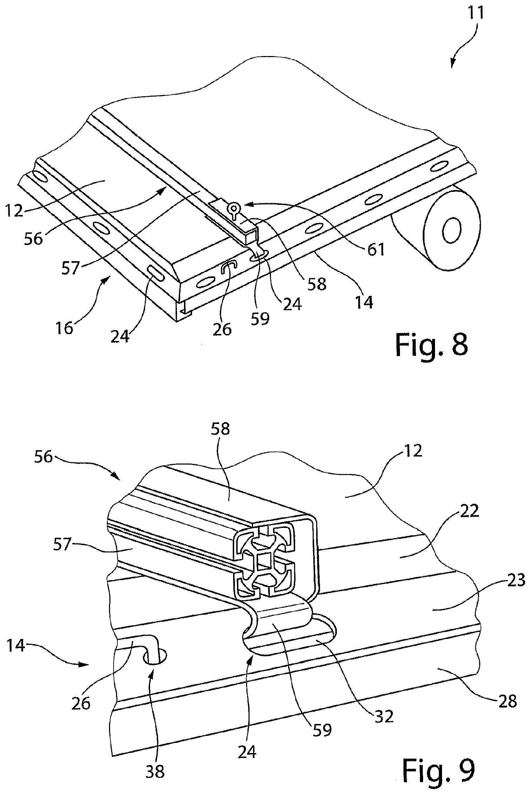

Figur 8 zeigt eine perspektivische Ansicht auf die Ladefläche 12 des Anhängers 11 mit einem daran angeordneten Spannbalken 56. Es können auch mehrere solcher Spannbalken 56 in Abstand zueinander an der Ladefläche 12 angebracht werden. Dadurch kann ein Verrutschen eines zwischen zwei Spannbalken 56 angeordneten Transportguts, beispielsweise einer auf die Ladefläche 12 aufgesetzten Palette, verhindert werden. An dem Spannbalken 56 kann auch eine nicht näher dargestellte Trägereinrichtung befestigt werden, wie zum Beispiel ein Fahrrad- oder Motorradträger. Ebenso kann vorgesehen sein, dass der Spannbalken 56 Teil einer solchen Trägereinrichtung ist.

Der Spannbalken 56 kann längs oder quer zur Ladefläche 12 befestigbar sein. Der Spannbalken 56 liegt nach der Montage auf der Ladefläche 12 auf und ist an zwei sich gegenüberliegenden Durchgangsbohrungen 24 der Profile 14 befestigt. Der Spannbalken 56 umfasst eine sich länglich erstreckende Profilschiene 57, deren Endabschnitte jeweils eine Aufnahme 58 aufnimmt. Die Aufnahme 58 umfasst einen Haken 59, der in die Durchgangsbohrung 24 eingreift. Dadurch ist der Spannbalken 56 in einer definierten Position auf der Ladefläche 12 gehalten.

Figur 9 zeigt eine Detailansicht eines Endabschnitts des Spannbalkens 56. Die Aufnahme 58 des Spannbalkens 56 ist U-förmig ausgebildet. An einem Ende der Aufnahme 58 ist der Haken 59 vorgesehen. Über die Öffnung der U-förmigen Aufnahme 58 ist die Profilschiene 57 eingesetzt. Die Profilschiene 57 kann in der Aufnahme 58 in Längsrichtung verschiebbar vorgesehen sein. Dadurch kann die Länge des Spannbalkens 56 an einen Abstand zwischen zwei sich gegenüberliegenden Durchgangsbohrungen 24 angepasst werden. An der Aufnahme 58 kann eine Arretierung 61 vorgesehen sein, durch welche die Aufnahme 58 und die Profilschiene 57 zueinander fixierbar sind. Diese Arretierung 61 kann beispielsweise durch ein Schraubelement ausgebildet sein, welches durch eine Durchgangsbohrung in der Aufnahme 58 hindurch, mit einem Nutenstein, der in eine Nut in der Profilschiene 57 eingesetzt ist, verschraubt ist. Ebenso kann die Arretierung 61 auch unmittelbar an der Profilschiene 57 angreifen, beispielsweise das Schraubelement in eine Gewindebohrung in der Profilschiene 57 eingeschraubt sein.

## Patentansprüche

1. Profil für eine Ladefläche (12) zur Ladungssicherung, insbesondere eine Ladefläche eines Fahrzeugs, Anhängers, Transportcontainers oder dergleichen,
- mit einem sich in Längsrichtung erstreckenden Grundkörper (21), dessen Länge ein Vielfaches der Breite aufweist,
- wobei der Grundkörper (21) einen Anschlussabschnitt (22) aufweist, welcher zur Ladefläche (12) anordenbar ist, sowie einen Befestigungsabschnitt (23), der sich benachbart zum Anschlussabschnitt (22) erstreckt und in Längsrichtung mehrere zueinander beabstandete Durchgangsbohrungen (24) aufweist, **dadurch gekennzeichnet,**
- **dass** zumindest ein Verschließelement (32) vorgesehen ist, welches an einer Innenseite (31) des Befestigungsabschnitts (23) vorgesehen ist und welches in einer Ausgangsposition (33) an der Innenseite (31) des Befestigungsabschnitts (23) anliegt und die Durchgangsbohrungen (24) verschließt,
- **dass** das Verschließelement (32) in eine Befestigungsposition (34) überführbar ist, in der zumindest eine Durchgangsbohrung (24) geöffnet ist, und
- **dass** zumindest ein Haken einer Ladungssicherungseinrichtung in der Durchgangsbohrung (24) positionierbar ist.

2. Profil nach Anspruch 1 **dadurch gekennzeichnet, dass** das zumindest eine Verschließelement (32) durch zumindest eine Halteeinrichtung (27) relativ zum Befestigungsabschnitt (23) verschiebbar aufgenommen ist und vorzugsweise die zumindest eine Halteeinrichtung (27) in Längsrichtung des Befestigungsabschnitts (23) gesehen zwischen zwei Durchgangsbohrungen (24) angeordnet ist.

3. Profil nach Anspruch 2, **dadurch gekennzeichnet, dass** die Halteeinrichtung (27) einen Befestigungsbügel (26) aufweist, dessen Befestigungsöse (36) an einer Außenseite (18) des Befestigungsabschnitts (23) positioniert ist, und zumindest ein Bügelabschnitt (37) des Befestigungsbügels (26) durch den Befestigungsabschnitt (23) zur Innenseite (31) hindurchgeführt ist und an dem Verschließelement (32) angreift und vorzugsweise der Befestigungsbügel (26) zum Befestigungsabschnitt (23) und zum Verschließelement (32) relativ verschiebbar vorgesehen ist und vorzugsweise aus einer Nichtgebrauchsposition (46) in eine Gebrauchsposition (47) überführbar ist.

4. Profil nach einem der Ansprüche 2 oder 3, **dadurch gekennzeichnet, dass** die Halteeinrichtung (27) das Verschließelement (32) federnd nachgiebig aufnimmt, sodass dieses selbstständig in der Ausgangsposition (33) angeordnet ist.

5. Profil nach einem der vorhergehenden Ansprüche, **dadurch gekennzeichnet, dass** zwischen dem Verschließelement (32) und dem zur Innenseite (31) des Befestigungsabschnitts (23) und durch das Verschließelement (32) hindurch sich erstreckenden Befestigungsbügel (26) ein nachgiebiges Kraftspeicherelement (41) vorgesehen ist und vorzugsweise das Kraftspeicherelement (41) als ein Federelement, insbesondere ein blattfederartiges Federelement oder eine Federspange, ausgebildet ist.

6. Profil nach einem der Ansprüche 2 bis 5, **dadurch gekennzeichnet, dass** zumindest zwei Halteeinrichtungen (27) für ein Verschließelement (32) vorgesehen sind, insbesondere ein Verschließelement (32) sich entlang des Befestigungsabschnitts (23) erstreckt und mehrere Halteeinrichtungen (27) vorgesehen sind.

7. Profil nach einem der vorhergehenden Ansprüche, **dadurch gekennzeichnet, dass** der Anschlussabschnitt (22) des Grundkörpers (21) eine äußere Auflagefläche (51) aufweist, die bündig zur Ladefläche (12) anordenbar ist.

8. Profil nach einem der vorhergehenden Ansprüche, **dadurch gekennzeichnet, dass** sich an den Befestigungsabschnitt (23) ein Abschlussabschnitt (28) anschließt, welcher dem Anschlussabschnitt (22) gegenüberliegt und eine seitliche Begrenzung der Ladefläche (12) bildet.

9. Profil nach einem der vorhergehenden Ansprüche, **dadurch gekennzeichnet, dass** der Grundkörper (21), welcher vorzugsweise zumindest den Anschlussabschnitt (22) und den Befestigungsabschnitt (23) umfasst, aus einem plattenförmigen Material besteht, welches gekantet ist oder als ein gezogenes Profil hergestellt ist.

10. Profil nach einem der vorhergehenden Ansprüche, **dadurch gekennzeichnet, dass** der Befestigungsabschnitt (23) gegenüber dem Anschlussabschnitt (22), der zumindest abschnittsweise in der Ebene der Ladefläche (12) liegt, nach außen abfallend geneigt ist, und der Grundkörper (21) als ein Außenrahmenprofil ausgebildet ist, welches an eine äußere Seitenkante (17) der Ladefläche (12) angrenzend befestigt ist.

11. Profil nach einem der Ansprüche 1 bis 9, **dadurch gekennzeichnet, dass** der Befestigungsabschnitt (23) und der Anschlussabschnitt (22) in einer gemeinsamen Ebene, vorzugsweise in der Ebene der Ladefläche (12), liegen und der Grundkörper (21) als Innenrahmenprofil ausgebildet ist, welches zwischen zwei Ladeflächen (12) befestigbar ist.

12. Ladefläche zur Aufnahme eines Transportguts, insbesondere für ein Fahrzeug, Anhänger, Transportcontainer oder dergleichen, mit einem sich flächig erstreckenden Aufnahmebereich (13) für das Transportgut, wobei dem Aufnahmebereich (13) zumindest ein Profil (14) zum Anbringen einer Ladungssicherungseinrichtung zugeordnet ist, **dadurch gekennzeichnet, dass** das zumindest eine Profil (14) nach einem der Ansprüche 1 bis 11 ausgebildet ist.

13. Ladefläche nach Anspruch 12, **dadurch gekennzeichnet, dass** das zumindest eine Profil (14) in dem Aufnahmebereich (13) vorgesehen ist oder das zumindest eine Profil (14) an wenigstens einer Seitenkante (17) des Aufnahmebereichs (13) angeordnet ist.

14. Ladefläche nach Anspruch 12 oder 13, **dadurch gekennzeichnet, dass** Profile (14) an zwei einander gegenüberliegenden Seitenkanten (17) des Aufnahmebereichs (13) vorgesehen sind und einen seitlichen Rahmen (16) bilden oder den Aufnahmebereich (13) vollständig umgeben und einen umlaufenden Rahmen (16) bilden.

15. Ladefläche nach einem der Ansprüche 12 bis 14, **dadurch gekennzeichnet, dass** an den Durchgangsbohrungen (24) zumindest ein Spannbalken (56) befestigbar ist und vorzugsweise der Spannbalken (56) zumindest eine Profilschiene (57) und zumindest zwei Aufnahmen (58) umfasst, wobei die Aufnahme (58) einen Haken (59) zum Eingreifen in die Durchgangsbohrung (24) aufweist, welche den Spannbalken (56) zum Aufnahmebereich (13) fixiert und vorzugsweise die Profilschiene (57) in der Lage innerhalb der Aufnahme (58) veränderbar und durch eine lösbare Verbindung fixiert ist.

## Claims

1. A profile for a loading area (12) for securing cargo, in particular a loading area of a vehicle, a trailer, a transport container or the like,
- having a main body (21) that extends in a longitudinal direction and the length of which is a multiple of its width,
- said main body (21) having an attachment portion (22) which may be arranged with respect to the loading area (12) and a fastening portion (23) which extends adjacent to the attachment portion (22) and has a plurality of through holes (24) longitudinally spaced apart from one another, **characterised in that**
- provision is made for at least one closure element (32) to be present which is provided on an inner side (31) of the fastening portion (23) and which in an initial position (33) abuts on said inner side (31) of the fastening portion (23) and closes the through bores (24),
- the closure element (32) may be transferred to a fastening position (34) in which at least one through bore (24) is opened, and
- at least one hook of a cargo securing device may be positioned in said through bore (24).

2. The profile as claimed in claim 1, **characterised in that** the at least one closure element (32) is received by at least one retaining device (27) in such a manner as to be displaceable with respect to the fastening portion (23) and **in that**, when considered in a longitudinal direction of the fastening portion (23), the at least one retaining device (27) is preferably disposed between two through bores (24).

3. The profile as claimed in claim 2, **characterised in that** the retaining device (27) has a fastening bracket (26) the fastening eyelet (36) of which is positioned at an outer side (18) of the fastening portion (23), and **in that** at least one bracket portion (37) of the fastening bracket (26) is passed through the fastening portion (23) towards the inner side (31) and is applied to the closure element (32), and **in that** the fastening bracket (26) is preferably provided in such a manner as to be displaceable with respect to the fastening portion (23) and to the closure element (32) and may preferably be transferred from a non-use position (46) to a use position (47).

4. The profile as claimed in any one of claims 2 or 3, **characterised in that** the retaining device (27) receives the closure element (32) in a flexibly resilient manner, such that the latter is automatically disposed in the initial position (33).

5. The profile as claimed in any of the preceding claims, **characterised in that** between the closure element (32) and the fastening bracket (26) which extends through the closure element (32) and towards the inner side (31) of the fastening portion (23), a resilient energy storing member (41) is provided, and **in that** said energy storing member (41) is preferably realised in the form of a spring element, in particular a leaf-spring-type spring element or a spring clasp.

6. The profile as claimed in any one of claims 2 to 5, **characterised in that** at least two retaining devices (27) are provided for one closure element (32), **in that** in particular one closure element (32) extends along the fastening portion (23), and **in that** a plurality of retaining devices (27) is provided.

7. The profile as claimed in any of the preceding claims, **characterised in that** the attachment portion (22) of the main body (21) has an outer support surface (51) which may be arranged flush with respect to the loading area (12).

8. The profile as claimed in any of the preceding claims, **characterised in that** the fastening portion (23) is followed by a terminal portion (28) which is located opposite the attachment portion (22) and forms a lateral delimitation of the loading area (12) .

9. The profile as claimed in any of the preceding claims, **characterised in that** the main body (21), which preferably comprises at least the attachment portion (22) and the fastening portion (23), consists of a plate-shaped material which is bent or is manufactured as a drawn profile.

10. The profile as claimed in any of the preceding claims, **characterised in that** the fastening portion (23) is downwardly sloped towards the outside with respect to the attachment portion (22) which is, at least sectionwise, in the plane of the loading area (12), and **in that** the main body (21) is realised as an outer frame profile that is fastened adjacent to an outer lateral edge (17) of the loading area (12).

11. The profile as claimed as claimed in any one of claims 1 to 9, **characterised in that** the fastening portion (23) and the attachment portion (22) lie in the same plane, preferably in the plane of the loading area (12), and **in that** the main body (21) is realised as an inner frame profile that may be fastened between two loading areas (12).

12. A loading area for receiving cargo, in particular for a vehicle, a trailer, a transport container or the like, having a cargo reception zone (13) extending in a planar manner, with at least one profile (14) for attaching a cargo securing device being associated with said reception zone (13), **characterised in that** the at least one profile (14) is realised as claimed in any one of claims 1 to 11.

13. The loading area as claimed in claim 12, **characterised in that** the at least one profile (14) is provided in the reception zone (13), or **in that** said at least one profile (14) is disposed on at least one lateral edge (17) of said reception zone (13) .

14. The loading area as claimed in claim 12 or 13, **characterised in that** profiles (14) are provided on two opposite lateral edges (17) of the reception zone (13), forming a lateral frame (16), or **in that** they surround the reception zone (13) entirely, thus forming a circumferential frame (16).

15. The loading area as claimed in any one of claims 12 to 14, **characterised in that** at least one clamping bar (56) may be attached on the through bores (24) and **in that** said clamping bar (56) preferably comprises at least one profile rail (57) and at least two retainers (58), the retainer (58) including a hook (59) designed for engagement with the through bore (24) which fastens the clamping bar (56) with respect to the reception zone (13), and **in that** preferably the position of the profile rail (57) within the retainer (58) may be changed and is locked by means of a releasable connection means.

## Revendications

1. Profilé pour une surface de chargement (12) destiné à sécuriser une charge, en particulier une surface de chargement d'un véhicule, d'une remorque, d'un conteneur de transport ou d'autres objets similaires,
- pourvu d'un corps de base (21) qui s'étend en sens longitudinal et dont la longueur est considérablement plus grande que la largeur,
- le corps de base (21) présentant une partie de raccordement (22) qui peut être disposée par rapport à la surface de chargement (12) ainsi qu'une partie de fixation (23) qui s'étend de manière contiguë à ladite partie de raccordement (22) et présente en sens longitudinal plusieurs trous traversants (24) espacés les uns des autres, **caractérisé en ce que**
- il est prévu au moins un élément de fermeture (32) qui est prévu sur une face intérieure (31) de la partie de fixation (23) et qui, dans une position initiale (33), repose contre la face intérieure (31) de la partie de fixation (33) et obture les trous traversants (24),
- l'élément de fermeture (32) peut passer dans une position de fixation (34) dans laquelle au moins un trou traversant (24) est ouvert, et
- au moins un crochet d'un dispositif de sécurisation de charge peut être positionné dans le trou traversant (24).

2. Profilé selon la revendication 1, **caractérisé en ce que** ledit au moins un élément de fermeture (32) est logé de manière à pouvoir être déplacé par rapport à la partie de fixation (23) grâce à au moins un dispositif de retenue (27) et **en ce que** ledit au moins un dispositif de retenue (27) est, vu dans le sens longitudinal de la partie de fixation (23), disposé de préférence entre deux trous traversants (24) .

3. Profilé selon la revendication 2, **caractérisé en ce que** le dispositif de retenue (27) présente un étrier de fixation (26) dont l'œillet de fixation (36) est positionné sur une face extérieure (18) de la partie de fixation (23) et **en ce qu'**au moins une partie d'étrier (37) de l'étrier de fixation (26) passe à travers la partie de fixation (23) vers la face intérieure (31) et appuie contre l'élément de fermeture (32) et que l'étrier de fixation (26) est de préférence prévu de manière à pouvoir se déplacer par rapport à la partie de fixation (23) et par rapport à l'élément de fermeture (32) et peut de préférence passer d'une position de non-utilisation (46) à une position d'utilisation (47).

4. Profilé selon l'une quelconque des revendications 2 ou 3, **caractérisé en ce que** le dispositif de retenue (27) reçoit de manière résiliente l'élément de fermeture (32) de sorte que celui-ci est disposé de manière autonome dans la position initiale (33).

5. Profilé selon l'une quelconque des revendications précédentes, **caractérisé en ce qu'**un élément accumulateur d'énergie (41) élastique est prévu entre l'élément de fermeture (32) et l'étrier de fixation (26) qui s'étend vers la face intérieure (31) de la partie de fixation (23) et à travers l'élément de fermeture (32) et que l'élément accumulateur d'énergie (41) est de préférence réalisé en tant qu'élément ressort, en particulier qu'élément ressort en forme de lame, ou en tant qu'agrafe ressort.

6. Profilé selon l'une quelconque des revendications 2 à 5, **caractérisé en ce qu'**au moins deux dispositifs de retenue (27) sont prévus pour un élément de fermeture (32), **en ce qu'**en particulier un élément de fermeture (32) s'étend le long de la partie de fixation (23) et que plusieurs dispositifs de retenue (27) sont prévus.

7. Profilé selon l'une quelconque des revendications précédentes, **caractérisé en ce que** la partie de raccordement (22) du corps de base (21) présente une surface d'appui extérieure (51) qui peut être disposée de niveau avec la surface de chargement (12) .

8. Profilé selon l'une quelconque des revendications précédentes, **caractérisé en ce que** la partie de fixation (23) est suivie par une partie d'extrémité (28) située à l'opposé de la partie de raccordement (22) et forme une délimitation latérale de la surface de chargement (12).

9. Profilé selon l'une quelconque des revendications précédentes, **caractérisé en ce que** le corps de base (21), qui comprend de préférence au moins la partie de raccordement (22) et la partie de fixation (23), est constitué d'un matériau en forme de plaque dont les bords sont pliés ou est fabriqué en tant que profilé étiré.

10. Profilé selon l'une quelconque des revendications précédentes, **caractérisé en ce que** la partie de fixation (23) est inclinée de manière descendante vers l'extérieur par rapport à la partie de raccordement (22) qui est située au moins en partie dans le plan de la surface de chargement (12) et **en ce que** le corps de base (21) est réalisé sous la forme d'un profilé de cadre extérieur qui est fixé de manière contiguë à un bord latéral extérieur (17) de la surface de chargement (12).

11. Profilé selon l'une quelconque des revendications 1 à 9, **caractérisé en ce que** la partie de fixation (23) et la partie de raccordement (22) se situent dans un plan commun, de préférence dans le plan de la surface de chargement (12), et que le corps de base (21) est formé en tant que profilé de cadre intérieur qui peut être fixé entre deux surfaces de chargement (12).

12. Surface de chargement destinée à recevoir une marchandise à transporter, en particulier pour un véhicule, une remorque, un conteneur de transport ou autres objets similaires, pourvue d'une zone de réception (13) destinée à recevoir la marchandise à transporter et s'étendant de manière plane, au moins un profilé (14) destiné à la fixation d'un dispositif de sécurisation de charge étant affecté à la zone de réception (13), **caractérisée en ce que** ledit au moins un profilé (14) est formé selon l'une quelconque des revendications 1 à 11.

13. Surface de chargement selon la revendication 12, **caractérisée en ce que** ledit au moins un profilé (14) est prévu dans la zone de réception (13) ou que ledit au moins un profilé (14) est disposé sur au moins un bord latéral (17) de ladite zone de réception (13).

14. Surface de chargement selon la revendication 12 ou 13, **caractérisée en ce que** des profilés (14) sont prévus sur deux bords latéraux (17) opposés de la zone de réception (13) et forment un cadre (16) latéral ou entourent complètement ladite zone de réception (13) et forment un cadre (16) circonférentiel.

15. Surface de chargement selon l'une quelconque des revendications 12 à 14, **caractérisée en ce qu'**au moins une barre de serrage (56) peut être fixée au niveau des trous traversants (24) et **en ce que** la barre de serrage (56) comprend de préférence au moins un rail profilé (57) et au moins deux réceptions (58), la réception (58) présentant un crochet (59) destiné s'engager dans le trou traversant (24) qui fixe la barre de serrage (56) par rapport à la zone de réception (13) et **en ce que** le rail profilé (57) peut de préférence modifier sa position à l'intérieur de la réception (58) et est fixée dans la position ainsi définie par une liaison amovible.
